(19) Europäisches Patentamt
European Patent Office
Office européen des brevets

(11) **EP 2 743 129 B1**

(12) **FASCICULE DE BREVET EUROPEEN**

(45) Date de publication et mention
de la délivrance du brevet:
**08.07.2020 Bulletin 2020/28**

(51) Int Cl.:
***B60Q 1/14*** *(2006.01)*

(21) Numéro de dépôt: **13196633.5**

(22) Date de dépôt: **11.12.2013**

(54) **Procédé et dispositif de commande d'un faisceau lumineux**

Verfahren und Vorrichtung zur Steuerung eines Lichtstrahls

Method and device for controlling a light beam

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **11.12.2012 FR 1261879**

(43) Date de publication de la demande:
**18.06.2014 Bulletin 2014/25**

(73) Titulaire: **VALEO VISION
93012 Bobigny Cedex (FR)**

(72) Inventeurs:
• **Sanchez, Vanesa
75011 PARIS (FR)**
• **Sommerschuh, Stephan
75020 PARIS (FR)**

(56) Documents cités:
**EP-A1- 2 156 983         DE-A1-102007 028 658
DE-A1-102007 040 042     DE-A1-102008 014 182
DE-A1-102008 039 091     DE-A1-102011 050 535**

EP 2 743 129 B1

Printed by Jouve, 75001 PARIS (FR)

**Description**

La présente invention concerne un procédé et un dispositif de commande d'un faisceau lumineux émis par un véhicule, et en pratique par n'importe quel type de véhicule équipé de phares, par exemple un véhicule automobile.

Il est connu de longue date de pouvoir choisir, grâce à des commandes manuelles au volant d'un véhicule automobile, de circuler soit en feux de croisement, soit en feux de route. Les premiers permettent d'éviter d'éblouir les occupants des autres véhicules, mais ils ne donnent pas une visibilité satisfaisante, tandis que les seconds permettent d'éclairer une large zone à l'avant du véhicule mais en éblouissant les occupants des véhicules circulant devant (par l'intermédiaire des rétroviseurs) ou ceux des véhicules venant en sens inverse.

Par ailleurs, le passage d'un mode d'éclairage à l'autre est fastidieux pour le conducteur, ce qui peut poser un problème de concentration sur la conduite. Certains conducteurs peuvent également mal juger du moment opportun pour le changement de mode, ce qui les conduit à retarder ou anticiper celui-ci.

Pour éviter ces inconvénients, il a déjà été proposé des systèmes de contrôle des faisceaux lumineux permettant de disposer de faisceaux au contour adaptatif. Plus exactement, ces systèmes permettent d'occulter une partie du faisceau lorsqu'il a été détecté la présence d'un usager de la route susceptible d'être ébloui par la puissance lumineuse des feux de route. De la sorte, la zone occupée par l'usager de la route n'est pas éclairée par des feux de route tandis que le reste de la route est éclairée par les feux de route. Le conducteur du véhicule dont on contrôle le faisceau bénéficie ainsi d'une visibilité améliorée par rapport à un mode de fonctionnement en totalité des feux de croisement, sans toutefois éblouir les occupants du véhicule tiers.

On connaît de la demande de brevet FR 2970686, déposée par la demanderesse du présent brevet, un système de contrôle des faisceaux lumineux perfectionné qui permet de projeter, dans une zone cible qui contient un véhicule tiers, une quantité de lumière réglée à une valeur consigne prenant en considération le seuil d'éblouissement des usagers de la route. On vise ainsi à éclairer le mieux possible la route pour le véhicule dont on contrôle le faisceau lumineux, et à ne pas éblouir les occupants du véhicule tiers. Cette demande de brevet porte essentiellement sur les modes de calcul de la quantité de lumière consigne.

On connait également le document DE 10 2011 050535 A1 qui décrit un système de commande d'un faisceau lumineux émis par un véhicule, visant à occulter une zone du faisceau dans laquelle se trouve un véhicule tiers. Dans ce système, on détecte les sources lumineuses d'un véhicule tiers et on détermine des valeurs d'angles entre chacun des projecteurs du véhicule et le véhicule tiers, de sorte à englober les sources lumineuses du véhicule tiers. On ajoute ensuite une correction angulaire supplémentaire afin de s'assurer que les angles calculés pour chacun des deux projecteurs se recoupent : le système produit en effet une extinction du faisceau généré dans les deux zones angulaires calculées, de sorte à fournir deux fenêtres « noires » projetées sur un plan vertical frontal du véhicule tiers. Ce système ne tient pas compte dans ses calculs ni de la distance entre les véhicules ni de la largeur du véhicule tiers. Cela nuit à la précision et finesse de ce système : en fonction de la distance de croisement et de l'angle de la route entre les véhicules, il persiste un risque d'éblouissement du conducteur du véhicule tiers. De plus la correction angulaire supplémentaire agrandit plus que de nécessaire la zone occultée.

La présente invention traite de la définition de cette zone cible, et elle vise à délimiter finement la zone cible, afin de s'assurer d'une part qu'aucun des occupants du véhicule tiers, qu'il soit conducteur ou passager, ne soit ébloui, et d'autre part que cette zone cible soit la moins large possible pour garder un éclairage de la route satisfaisant autour du véhicule tiers.

L'invention concerne à cette fin un procédé de commande d'un faisceau lumineux émis par un véhicule tel que défini dans la revendication 1. On détecte par des moyens d'acquisition d'image, par exemple une caméra, la position angulaire, par rapport à la direction de circulation du véhicule, des dispositifs de signalisation et/ou d'éclairage d'un véhicule tiers et dans lequel on définit une zone cible englobant au moins en partie le véhicule tiers et dans laquelle l'intensité du faisceau lumineux est atténuée. Selon une caractéristique avantageuse de l'invention, on calcule au préalable une empreinte virtuelle au moins partielle du véhicule tiers et l'on s'assure que la définition de la zone cible permette d'englober intégralement cette empreinte virtuelle. On détermine cette empreinte à partir d'un point obtenu par la détection de la caméra. On ajuste alors la définition de la zone cible de manière à ce qu'elle couvre chacun des côtés d'un quadrilatère. Ainsi, on s'assure que le faisceau lumineux à l'intensité modérée couvre bien le véhicule tiers, ou tout au moins l'habitacle dans lequel se trouvent les occupants, et l'on peut ajuster l'étendue de la zone cible à cette empreinte virtuelle, dont une dimension est représentative d'une largeur du véhicule tiers et dont la profondeur selon la direction de circulation du véhicule est représentative d'une longueur estimée de ce véhicule tiers par des moyens de calcul.

Selon un mode de réalisation particulier qui n'est pas selon l'invention, le procédé suivant l'invention comporte une étape de mesure de la distance entre les deux véhicules. Dans les étapes du procédé qui suivent alors, cette valeur de distance déterminée par l'étape de mesure peut servir de base à des calculs pour déterminer quel type de véhicule est à considérer pour générer la zone cible dans laquelle l'intensité du faisceau lumineux est atténuée par rapport à la normalité des phares en feux de route. On calcule dans un premier temps la distance entre les dispositifs de signalisation et/ou d'éclairage du véhicule tiers en fonction à la fois de la distance inter véhicules et de la valeur des angles par rapport à la direction de circulation auxquels ont été détectés respectivement les deux dispositifs de signalisation et/ou d'éclairage du véhicule tiers. Puis on définit l'empreinte du véhicule tiers par le calcul d'un rectangle défini par un petit côté égal à cette distance entre les dispositifs de signalisation et/ou d'éclairage du véhicule tiers calculée précédemment à laquelle on ajoute une valeur additionnelle correspondant aux rétroviseurs latéraux et par un grand côté déterminé arbitrairement en fonction de ce petit côté. Enfin, on calcule, pour chaque phare du véhicule, des angles définis entre la direction de circulation du véhicule et la droite passant par ce phare et chacun des coins dudit rectangle, et on commande le réglage du faisceau lumineux en atténuant l'intensité lumineuse de chaque phare dans la zone cible dont les frontières angulaires sont définies de manière à ce qu'une des frontières passe par le coin correspondant à celui des angles calculés précédemment de plus petite valeur tandis que l'autre des frontières passe par le coin correspondant à celui des angles calculés précédemment de plus grande valeur.

Une telle réalisation présente l'avantage de définir précisément une zone cible ajustée sur une empreinte virtuelle qui couvre les occupants du véhicule tiers. La définition en deux dimensions (reflétant la largeur et la longueur du véhicule tiers) de l'empreinte permet de s'assurer que les occupants se trouvent bien dans cette zone cible, sans qu'il soit nécessaire d'ajouter des marges de sécurité supplémentaires pour élargir la plage angulaire de la zone cible. La zone sur laquelle on peut alors commander les phares en pleine intensité lumineuse sans risques d'éblouissement est ajustée au plus près du véhicule tiers, ce qui offre un confort et une sécurité de conduite augmentés pour le conducteur du véhicule dont on commande le faisceau lumineux.

Selon des variantes de réalisation particulières, le grand côté de l'empreinte bidimensionnelle du véhicule tiers est obtenu par calcul, en appliquant au petit côté de cette empreinte un coefficient multiplicateur, ou par correspondance en utilisant une table de données pré enregistrée dans des moyens logiciels embarqués sur le véhicule.

De telles réalisations présentent l'avantage de calculer instantanément par les moyens logiciels la valeur du grand côté et donc de pouvoir définir en temps réel l'empreinte du véhicule tiers au fur et à mesure de son déplacement détecté par la caméra. On peut ainsi adapter l'étendue de la zone cible au plus juste par rapport au véhicule tiers, dans l'optique double de ne pas éblouir le véhicule tiers et d'avoir automatiquement le meilleur éclairage possible autour de ce véhicule tiers.

Selon un mode de réalisation particulier de l'invention, le procédé suivant l'invention diffère du précédent mode de réalisation en ce que la distance entre les véhicules n'est pas prise en compte. Dans une première variante, qui n'est pas selon l'invention, on utilise une valeur moyenne prédéterminée de largeur du véhicule tiers, établie à partir d'un échantillon représentatif au sens statistique des véhicules en circulation sur un territoire donné (plusieurs centaines de véhicules), sur lesquels on a mesuré la distance entre les dispositifs de signalisation et/ou d'éclairage du véhicule tiers, ce qui permet de calculer une distance moyenne à laquelle on ajoute un coefficient correcteur ou une valeur additionnelle correspondant aux rétroviseurs latéraux. Dans une variante selon l'invention, à chaque position du véhicule tiers détecté par la caméra, on envisage deux cas extrêmes représentatifs l'un de la détection potentielle d'un véhicule de petite largeur et l'autre de la détection potentielle d'un véhicule de grande largeur, et on associe à chacun de ces cas extrêmes une empreinte virtuelle intermédiaire rectangulaire. Pour chaque phare du véhicule, on calcule des angles définis entre la direction de circulation du véhicule et la droite passant par ce phare et certains des coins des empreintes intermédiaires rectangulaires. Selon les variantes de réalisation, on pourra choisir de calculer les angles pour chacun des coins ou seulement pour quatre d'entre eux spécifiquement choisis. Puis on commande le faisceau lumineux en réglant l'intensité lumineuse de chaque phare dans la zone cible dont les frontières angulaires sont définies de manière à ce qu'une des frontières passe par le coin correspondant à celui des angles calculés précédemment de plus petite valeur tandis que l'autre desdites frontières passe par le coin correspondant à celui des angles calculés précédemment de plus grande valeur.

Une telle solution présente l'avantage de s'affranchir de la valeur de la distance inter véhicules et de pouvoir mettre en place le procédé de commande selon l'invention même si le véhicule dont on commande le faisceau n'est pas équipé de moyens de mesure suffisamment précis pour déterminer cette distance inter véhicules de façon satisfaisante.

L'invention concerne également un dispositif de commande, tel que défini dans la revendication 3, d'un faisceau de lumière émis par des phares d'un véhicule, comportant un dispositif de détection d'un véhicule tiers. Selon une caractéristique de l'invention, le dispositif de commande comporte des moyens logiciels adaptés à communiquer avec ce dispositif de détection pour recevoir en temps réel des informations relatives à la position angulaire des dispositifs d'éclairage et/ou de signalisation du véhicule tiers par rapport au dispositif de détection et à une direction donnée, par exemple la direction de circulation du véhicule. Les moyens logiciels intègrent des moyens de calcul adaptés d'une part à créer une empreinte virtuelle du véhicule tiers en deux dimensions reflétant sa largeur et sa longueur, et d'autre part à procéder en temps réel à des changements de repère pour calculer les angles des coins de cette empreinte virtuelle du véhicule tiers par rapport à ladite direction donnée et aux phares du véhicule, ledit faisceau de lumière comportant une zone cible dans laquelle l'intensité du faisceau lumineux est atténuée et dont les frontières sont ajustées en fonction desdits angles.

Selon des caractéristiques secondaires du mode de réalisation qui n'est pas selon l'invention, le dispositif de détection comporte une caméra et un appareil de détermination de la distance entre le véhicule et le véhicule tiers pour la mise en œuvre du procédé de commande dans lequel une mesure de la distance inter véhicules est nécessaire. Cet appareil de détermination pourra être formé par un télémètre laser, par un système à ultra sons, ou par un système de positionnement satellite globalisé adapté à communiquer avec un système équivalent embarqué sur le véhicule tiers.

L'invention concerne également un véhicule automobile comportant un dispositif de commande de faisceau lumineux selon l'invention, et dans lequel les phares comportent une pluralité de sources lumineuses. A titre d'exemple, ces sources lumineuses pourront être de type phare au xénon ou elles pourront prendre la forme de diodes électroluminescentes et l'on pourra contrôler l'allumage et l'extinction de chacune de ces sources, et éventuellement moduler leur intensité lumineuse.

L'invention sera maintenant plus complètement décrite dans le cadre de caractéristiques préférées et de leurs avantages, en faisant référence aux figures 1 à 7 dans lesquelles :

- la figure 1 illustre de façon schématique, vue de dessus, un faisceau obtenu par un procédé de commande selon l'état de la technique,
- la figure 2 illustre de façon schématique, vue de dessus, la rencontre de deux véhicules et différents paramètres utilisés pour caractériser cette rencontre
- les figures 3 et 4 illustrent de façon schématique, vue de dessus, des étapes du procédé de commande selon un mode de réalisation qui n'est pas selon l'invention, dans lequel on définit une empreinte virtuelle bidimensionnelle du véhicule tiers pour ajuster une zone cible d'intensité lumineuse moindre qui englobe cette empreinte,
- la figure 5 illustre de façon schématique, vue de dessus, la problématique posée par la détection des dispositifs de signalisation et/ou d'éclairage d'un véhicule tiers sans connaître précisément la distance entre les véhicules,
- et les figures 6 et 7 illustrent deux étapes successives du procédé de commande des phares selon un mode de réalisation de l'invention, dans lequel on définit des empreintes virtuelles bidimensionnelles pour deux cas extrêmes de largeur de véhicule tiers de manière à délimiter une zone cible d'intensité lumineuse moindre qui intègre tout type de véhicule tiers, quelle que soit sa largeur.

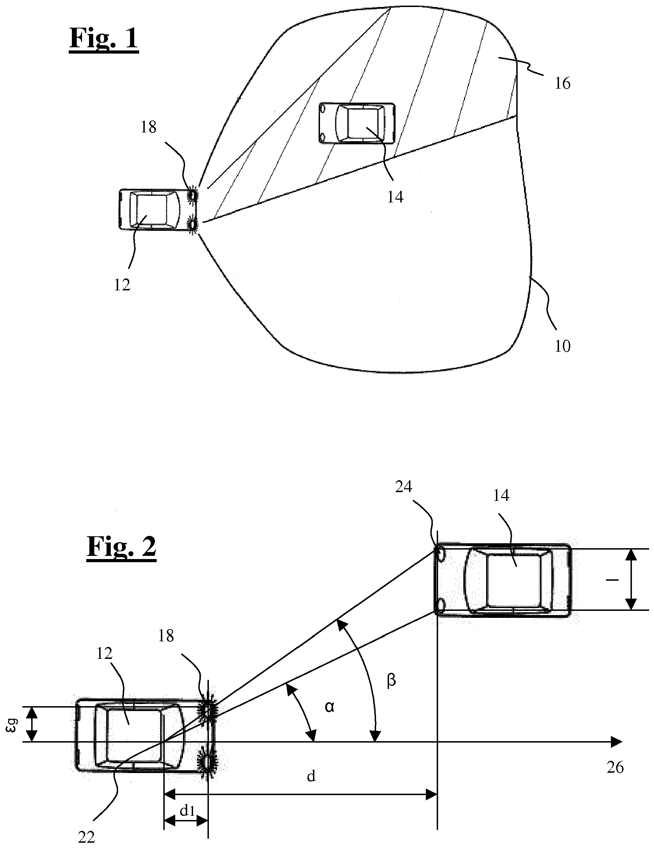

Comme illustré à la figure 1, il est connu de régler le faisceau 10 des phares d'un véhicule 12 lorsque celui-ci roule en feux de route et qu'il est détecté la présence d'usagers de la route susceptibles d'être éblouis par ce faisceau, ici un véhicule tiers 14 venant en sens inverse. On vise à déterminer une zone cible 16 de projection à moindre intensité lumineuse (représentée schématiquement en hachurés sur la figure 1) susceptible de ne pas éblouir les tiers, et on détermine l'étendue de cette zone cible, c'est à dire sa plage angulaire, de manière à ce qu'elle couvre le véhicule tiers.

La commande des phares 18 qui équipent le véhicule 12 consiste alors à projeter simultanément une quantité de lumière, dite quantité de lumière consigne et dont l'intensité lumineuse est déterminée pour ne pas éblouir, dans la zone cible, et une quantité de lumière à haute intensité lumineuse autour de cette zone cible.

Différentes stratégies sont envisageables pour réaliser cette projection simultanée de deux quantités de lumière, et on pourra se référer au brevet FR 2970686 pour connaître certaines d'entre elles. Avantageusement, les phares comportent une pluralité de diodes électroluminescentes, parmi lesquelles on détermine une ou plusieurs diodes à désactiver ou à moduler en intensité, de manière à projeter un faisceau dans la zone cible qui ne soit pas éblouissant. L'utilisation de ces diodes électroluminescentes permet que chacun des phares soit capable d'éclairer de part et d'autre du véhicule tiers, quelle que soit sa position. Ainsi, le phare droit, respectivement gauche, est capable d'éclairer ce qui est à gauche, respectivement à droite, du véhicule tiers.

Selon l'invention, on détermine les frontières angulaires de la zone cible en tenant compte d'une empreinte virtuelle 20 du véhicule tiers détecté qui est bidimensionnelle et reflète la largeur et la longueur du véhicule tiers.

On comprendra que le véhicule tiers peut être un véhicule automobile de tourisme, un véhicule utilitaire, ou encore un poids lourd, c'est à dire des véhicules qui ont en commun d'être équipés de dispositifs d'éclairage et/ou de signalisation, à savoir deux phares à l'avant et deux feux à l'arrière, mais qui présentent entre eux des largeurs distinctes et donc des distances différentes entre ces dispositifs.

Le véhicule dont on commande les phares selon le procédé de l'invention est équipé d'un système de détection de véhicule tiers, comportant au moins des moyens d'acquisition d'une image de la route 22 s'étendant devant le véhicule, ainsi que des moyens de traitement de cette image.

On comprend que selon l'invention, l'image pourra être acquise indifféremment par un appareil photo ou par une caméra, dès lors que des images pourront être prises en continue ou à intervalles très fréquents, pour adapter le réglage de la commande des faisceaux au déplacement du véhicule tiers lorsque celui-ci a été détecté. Dans la description qui va suivre, on prendra le cas d'une caméra, qui balaie en continue la route s'étendant devant le véhicule dont on commande le faisceau lumineux, et qui fournit en temps réel une image de la route.

L'image fournie par la caméra est transmise automatiquement à des moyens de traitement. Une information de détection des dispositifs de signalisation et/ou d'éclairage 24 d'un véhicule tiers est générée lorsque l'image traitée révèle des tâches lumineuses dont la forme, la dimension et l'intensité correspondent à des phares ou à des feux d'un véhicule tiers. Il sera en effet compris que ces dispositifs peuvent être indifféremment selon l'invention des phares d'un véhicule tiers amené à croiser la route du véhicule dont on commande le faisceau lumineux, ou bien des feux arrières d'un véhicule tiers qui précède dans le même sens de circulation le véhicule dont on commande le faisceau lumineux.

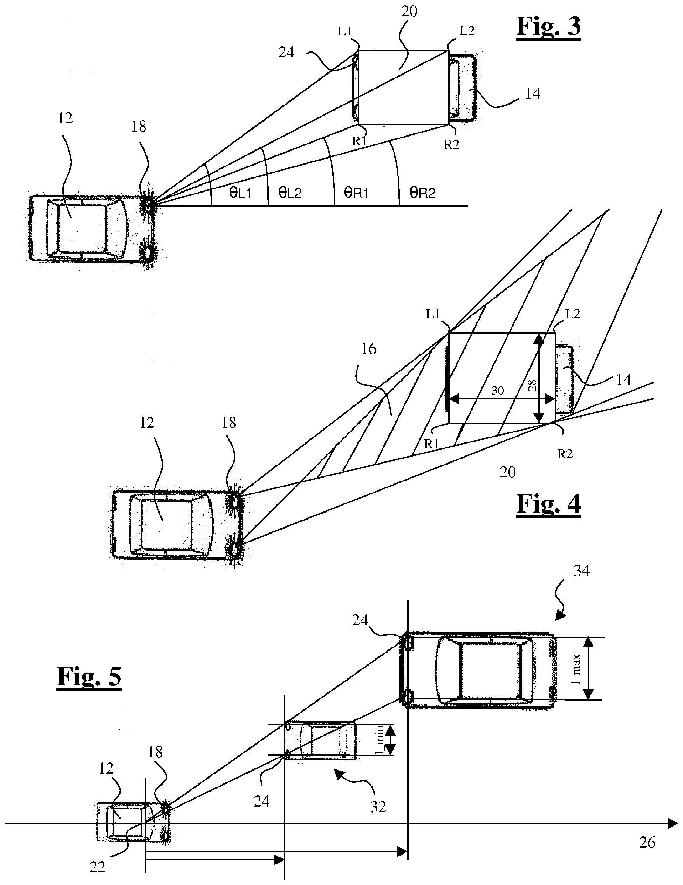

Le système de détection délivre alors en sortie une information de position angulaire des dispositifs de signalisation et/ou d'éclairage du véhicule tiers par rapport à l'axe optique de la caméra, c'est à dire ici la direction de circulation du véhicule 26 (visible notamment sur les figures 2 et 5). On associe un angle α au phare ou au feu gauche du véhicule tiers et on associe un angle β au phare ou au feu droit du véhicule tiers. Selon la position du véhicule tiers, les angles peuvent être positifs ou négatifs, étant entendu que de façon arbitraire ici, on sépare le champ de vision de la caméra en deux parties symétriques de part et d'autre de l'axe optique qui correspond à un angle nul et on détermine que le champ droit devant le véhicule correspond à des angles positifs tandis que le champ gauche correspond à des angles négatifs.

Le système de détection est adapté à communiquer avec des moyens logiciels embarqués sur le véhicule et qui reçoivent l'information en sortie du système de détection relative à la position angulaire des dispositifs de signalisation et/ou d'éclairage d'un véhicule tiers détecté. Par ailleurs, ces moyens logiciels sont paramétrés avec des valeurs propres au véhicule dont on commande le faisceau, telles que la longueur du capot ou le décalage dans un plan horizontal de la position de chacun des phares par rapport à la position de la caméra du système de détection. Ils comportent en outre des moyens de calcul permettant de déterminer, à partir de ces données, une instruction de commande des phares.

On va maintenant décrire deux modes de réalisation du procédé de commande de faisceaux lumineux le premier n'étant pas selon l'invention, le deuxième étant selon l'invention. Ces modes de réalisation sont similaires en ce que, dans les deux modes de réalisation, on vise à proposer une empreinte virtuelle définie au plus juste par rapport aux occupants du véhicule tiers, et à commander le faisceau lumineux pour qu'il présente une intensité moindre dans une zone cible 16 dont on délimite les frontières angulaires par rapport à cette empreinte virtuelle, pour à la fois s'assurer du non-éblouissement de ces occupants, et à la fois assurer un bon éclairage des zones situées autour du véhicule tiers pour garantir la sécurité de la conduite de l'utilisateur.

Dans le premier mode de réalisation, la distance entre les véhicules est déterminée, tandis que dans le deuxième mode de réalisation, selon l'invention, on réalise la commande du faisceau lumineux sans connaître cette distance inter véhicules. On entend par distance inter véhicules la distance d (visible sur la figure 2) séparant les deux véhicules, mesurée ici entre la caméra 22 embarquée sur le véhicule et la projection du point milieu entre les phares ou les feux détectés 24 du véhicule tiers sur une droite parallèle à la direction de circulation 26 du véhicule et passant par la caméra.

On comprend que le premier mode de réalisation est appliqué pour des véhicules équipés de moyens aptes à détecter la distance entre le véhicule utilisateur et le véhicule tiers. A cet effet, le système de détection présent sur le véhicule comporte en outre des moyens de détermination de la distance inter véhicules, comme par exemple un télémètre laser associé à la caméra, un système à ultrasons ou des moyens de positionnement globalisé de type GPS, adaptés à communiquer par satellite avec des moyens similaires embarqués sur le véhicule tiers.

La distance entre les véhicules étant dès lors obtenue par des moyens de mesure précis, on peut renseigner les moyens logiciels avec une valeur représentative de la largeur du véhicule tiers en procédant à un calcul mathématique portant sur cette distance et sur les angles de détection des feux du véhicule tiers.

$$d = \frac{l}{(\tan \beta - \tan \alpha)}$$

Dans cette équation, d représente la distance inter véhicules, tandis que représente la distance entre les deux dispositifs de signalisation et/ou d'éclairage du véhicule tiers détectés par la caméra. En outre, tel que cela a été précisé précédemment, α représente l'angle existant entre la trajectoire du véhicule (c'est à dire l'axe optique de la caméra) et la droite passant par la caméra et par le dispositif de signalisation et/ou d'éclairage du véhicule tiers détecté par la caméra qui est situé le plus à droite par rapport au véhicule dont on commande le faisceau, tandis que β représente l'angle existant entre la trajectoire du véhicule et la droite passant par la caméra et par le dispositif de signalisation et/ou d'éclairage du véhicule tiers détecté par la caméra qui est situé le plus à gauche par rapport au véhicule dont on commande le faisceau. Ces paramètres sont notamment visibles sur la figure 2.

Cette valeur représentative de la distance entre les dispositifs de signalisation et/ou d'éclairage, déterminée de façon fiable par le calcul précédent, est majorée d'une valeur estimative représentant la dimension des rétroviseurs latéraux du véhicule tiers pour, selon le premier mode de réalisation du procédé de l'invention, être utilisée pour déterminer une empreinte virtuelle du véhicule tiers, présentant la forme d'un quadrilatère, et plus précisément dans ce mode de réalisation, la forme d'un rectangle. La valeur majorée est utilisée comme valeur de petit côté 28 du rectangle définissant cette empreinte virtuelle, et on associe à cette valeur de petit côté du véhicule une deuxième valeur plus importante, qui va être utilisée pour définir la valeur du grand côté 30 du rectangle.

Les points de lumière correspondant aux phares ou aux feux détectés par la caméra définissent un segment qui selon le principe de l'invention est étendue dans au moins une direction pour définir l'empreinte virtuelle bidimensionnelle. La profondeur de l'empreinte virtuelle, qui permet de couvrir au moins l'habitacle du véhicule tiers et donc ses occupants s'obtient par le développement de cette ligne dans la direction de circulation du véhicule à l'opposé du véhicule 12. Éventuellement, on peut prévoir d'étendre la dimension du segment défini par les points de lumière, de manière à ce que ce segment aille au-delà des points de lumière. On s'octroie alors une marge latérale que l'on ajoute à la distance détectée entre les phares ou les feux du véhicule tiers, pour s'assurer de la couverture complète des occupants du véhicule tiers par l'empreinte virtuelle bidimensionnelle.

Dans la mesure où, dans ce mode de réalisation, il n'est pas prévu de moyens pour détecter la direction de circulation du véhicule tiers, on estime, tel que cela est visible sur la figure 3, que le véhicule tiers 14 roule parallèlement au véhicule 12 et le grand côté du rectangle est alors parallèle à la direction de circulation des deux véhicules. On comprend que l'on pourra orienter le rectangle différemment si des moyens de détection permettent de déterminer avec certitude que le véhicule tiers arrive avec un angle donné par rapport à la direction du véhicule dont on commande le faisceau lumineux.

Cette deuxième valeur plus grande pourra être obtenue par la multiplication de la valeur de la largeur du véhicule par un coefficient multiplicateur moyen, ou être obtenue par une cartographie qui associe instantanément à une largeur donnée d'un véhicule une longueur donnée de celui-ci.

Cette deuxième valeur pourra varier selon que le véhicule tiers roule dans la même direction ou dans la direction opposée du véhicule dont on contrôle le faisceau lumineux. A titre d'exemple, on pourra prévoir un coefficient multiplicateur plus important s'il s'avère que le véhicule tiers roule dans la même direction, afin de s'assurer que le conducteur de ce véhicule tiers, qui est alors plus éloigné du véhicule dont on commande le faisceau, est bien situé dans l'empreinte virtuelle et ne risque pas d'être ébloui par le faisceau.

Tel que cela est visible sur les figures 3 et 4, on a ainsi défini un rectangle qui couvre au moins partiellement le véhicule tiers, et en tout cas l'habitacle dans lequel sont assis les occupants, c'est à dire le conducteur et les passagers, que l'on ne veut pas éblouir. Selon le principe de l'invention, on définit la zone cible, dans laquelle l'intensité lumineuse du faisceau est réduite, de manière à ce que les bords délimitant angulairement cette zone cible passent par certains des coins du rectangle en laissant la totalité du rectangle à l'intérieur de la zone cible. On réduit ainsi au mieux la portion de la route non éclairée par des feux de route et on s'assure que les occupants du véhicule tiers sont tous situés dans la zone cible d'intensité lumineuse réduite.

Le fait d'utiliser cette empreinte du véhicule tiers pour définir les frontières angulaires de la zone cible rend inutile l'utilisation de marges de sécurité supplémentaires sous la forme de marges angulaires qui agrandissent de façon non nécessaire la zone cible de moindre intensité lumineuse autour du véhicule tiers. Selon l'invention, les dimensions de cette zone cible sont en effet ajustées aux dimensions de l'empreinte virtuelle qui englobe les occupants du véhicule tiers et les rétroviseurs, en faisant passer les frontières délimitant la zone cible par un des coins de l'empreinte du véhicule tiers.

Les moyens logiciels vont alors permettre de déterminer par quels coins du quadrilatère les frontières angulaires de la zone cible doivent passer pour respecter les conditions ci-dessus. On procède pour cela au calcul, pour chacun des phares du véhicule, des angles définis entre l'axe optique du phare et la droite passant par ce phare et par chacun des coins du quadrilatère. Pour la suite, on appellera coin proximal gauche L1 le coin du rectangle de l'empreinte virtuelle qui est situé à gauche du véhicule tiers 14, vu depuis le véhicule 12, à hauteur des phares ou des feux détectés du véhicule tiers, et on appellera coin distal droit R2 le coin du rectangle de l'empreinte virtuelle qui est situé à l'opposé, à droite du véhicule tiers 14, vu depuis le véhicule 12. Par analogie, on définit aussi le coin proximal droit R1 et le coin distal gauche L2.

A titre d'exemple, on détaille ici les calculs opérés par les moyens logiciels du véhicule pour déterminer la plage angulaire dans laquelle le phare gauche va émettre une intensité moindre.

Pour le phare gauche, tel que cela est visible sur la figure 3, on calcule les valeurs $\theta L1$ et $\theta L2$, qui correspondent aux angles existants entre la trajectoire du véhicule (confondue ici avec l'axe optique du phare gauche du véhicule) et la droite passant par le phare gauche du véhicule et par l'un des deux coins du rectangle situés les plus à gauche du véhicule tiers vu depuis le véhicule dont on commande le faisceau, et on va choisir entre ces deux valeurs pour déterminer par lequel de ces coins "gauches" va passer le bord délimitant angulairement la zone cible, pour le phare gauche. Et on calcule de façon semblable les valeurs $\theta R1$ et $\theta R2$ qui correspondent aux angles existants entre la trajectoire du véhicule (confondue ici avec l'axe optique du phare gauche du véhicule) et la droite passant par le phare gauche du véhicule et par l'un des deux coins du rectangle situés les plus à droite du véhicule tiers vue depuis le véhicule dont on commande le faisceau, afin de choisir ensuite entre ces deux valeurs pour déterminer par lequel de ces coins "droits" va passer le bord délimitant angulairement la zone cible, pour le phare gauche.

Le calcul des angles $\theta L1$ et $\theta L2$ est réalisé par les moyens logiciels au moyen des équations suivantes :

$$\tan\theta_{L1} = \frac{\dfrac{l\_\min}{\tan\beta - \tan\alpha}\times\tan\beta + (\mu * l\_\min) - \varepsilon g}{\dfrac{l\_\min}{\tan\beta - \tan\alpha} - d1}$$

et

$$\tan\theta_{L2} = \frac{\dfrac{l\_\max}{\tan\beta - \tan\alpha}\times\tan\beta + (\mu * l\_\max) - \varepsilon g}{\dfrac{l\_\max}{\tan\beta - \tan\alpha} - d1 + (k \times l\_\max)}$$

Dans ces équations, $\alpha$ et $\beta$ sont des variables obtenues en temps réel par le système de détection du véhicule, $\alpha$ et $\beta$ représentant des valeurs des angles tels qu'ils ont été décrit dans l'équation précédemment posée : $\alpha$ représente l'angle existant entre la trajectoire du véhicule et la droite passant par la caméra et par le phare ou le feu du véhicule tiers détecté par la caméra qui est le plus à droite par rapport au véhicule dont on commande le faisceau, tandis que $\beta$ représente l'angle existant entre la trajectoire du véhicule et la droite passant par la caméra et par le phare gauche du véhicule tiers détecté par la caméra qui est le plus à gauche par rapport au véhicule dont on commande le faisceau.

Par ailleurs, $\mu$, l_min, l_max, $\varepsilon g$, d1 et k sont des constantes rentrées comme paramètres de calcul dans les moyens logiciels embarqués dans le véhicule :

- $\mu$ est une constante définissant la marge latérale que l'on ajoute à la largeur détectée entre les feux du véhicule tiers, pour s'assurer de la couverture complète des occupants du véhicule tiers et des rétroviseurs par l'empreinte virtuelle bidimensionnelle. Tel que décrit précédemment, la définition d'une empreinte bidimensionnelle permet de réduire cette marge, voire de s'en passer, ce qui correspond dans l'équation à donner à la constante $\mu$ une valeur égale à 1.

- l_min et l_max sont des constantes représentatives de la largeur minimale et maximale que peut présenter un véhicule entre ses phares ou ses feux. On comprendra dès lors qu'il est possible de paramétrer différemment les moyens logiciels embarqués sur le véhicule pour s'adapter aux différentes zones géographiques sur lequel le véhicule peut être vendu. A titre d'exemple, les valeurs minimales et maximales de largeur pourront être choisies plus grandes pour le paramétrage du dispositif de commande des phares d'un véhicule vendu sur un marché réputé pour la grande dimension des véhicules locaux ou bien plus petites pour le paramétrage du dispositif de commande des phares d'un véhicule vendu sur un marché réputé pour la miniaturisation des véhicules locaux.

- $\varepsilon g$ et d1 sont des constantes propres au véhicule dont on commande le faisceau, et qui donnent le décalage dans un plan horizontal de la position du phare gauche par rapport au centre de la caméra. Et d1 correspond à la composante axiale de ce décalage, parallèlement à la direction de circulation du véhicule tandis que $\varepsilon g$ correspond à la composante transversale de ce décalage, perpendiculairement à la direction de circulation du véhicule.

- Enfin, k est un coefficient multiplicateur qui permet d'obtenir une estimation de la longueur du véhicule tiers en fonction de sa largeur. Tel que cela a été décrit précédemment, on pourrait ainsi remplacer dans les équations ci-dessus le facteur (k*l_max) par une valeur de longueur issue d'une cartographie embarquée dans les moyens logiciels et correspondant à la largeur maximale paramétrée.

Lorsque l'étape de calcul de chacun des angles a été opérée, les moyens logiciels réalisent une étape de comparaison pour déterminer quel va être l'angle conservé pour la définition de la frontière délimitant à gauche la zone cible. Pour réaliser cette comparaison, on tient compte des angles négatifs et des angles positifs, selon que le véhicule tiers qui a été détecté par la caméra soit placé à gauche ou à droite de l'axe optique de la caméra, vue depuis le véhicule dont on commande le faisceau. Dans tous les cas, les moyens logiciels conservent à ce stade l'angle le plus petit.

Dans le cas d'un sens de circulation continental à droite, tel qu'il est représenté sur les figures, cela correspond au coin proximal gauche L1 si le véhicule tiers vient en croisement (l'angle $\theta L1$ étant alors le plus grand en valeur absolue, mais avec un signe négatif), et cela correspond au coin distal gauche L2 si le véhicule tiers circule dans le même sens que le véhicule dont on commande le faisceau. On comprend que le paramétrage des moyens logiciels peut facilement être modifié pour s'adapter à un sens de circulation à gauche.

Dans l'exemple illustré aux figures 3 et 4, c'est le coin proximal gauche L1 qui va servir de point de repère pour dimensionner la frontière gauche de la zone cible (visible sur la figure 4).

Dans le même temps, et de façon similaire, on va déterminer, toujours pour le phare gauche, l'angle conservé pour la définition de la frontière droite de la zone cible. Pour cela, on va conserver cette fois l'angle le plus grand entre les deux angles obtenus par les équations suivantes :

$$\tan\theta_{R1} = \frac{\dfrac{l\_min}{\tan\beta - \tan\alpha} \times \tan\alpha - (\mu * l\_min) - \varepsilon g}{\dfrac{l\_min}{\tan\beta - \tan\alpha} - d1}$$

et

$$\tan\theta_{R2} = \frac{\dfrac{l\_max}{\tan\beta - \tan\alpha} \times \tan\alpha - (\mu * l\_max) - \varepsilon g}{\dfrac{l\_max}{\tan\beta - \tan\alpha} - d1 + (k \times l\_max)}$$

Tel que cela est visible sur la figure 4, c'est le coin distal droit R2 qui va servir de point de repère pour dimensionner la frontière droite de la zone cible.

Simultanément, on procède à des calculs équivalents pour le phare droit, en adaptant toutefois les formules ci-dessus par remplacement du décalage gauche εg par un décalage droit εd.

Les moyens logiciels sont alors adaptés à envoyer des instructions à chaque phare pour commander son éclairage, de manière à ce que dans la zone cible définie entre les frontières calculées précédemment, une quantité de lumière consigne, à moindre intensité lumineuse, est générée. Tel qu'illustré sur la figure 4, la zone hachurée correspondant à une intensité lumineuse moindre est bien ciblée sur le véhicule tiers.

On constate que, par cette définition d'une empreinte virtuelle bidimensionnelle, les occupants du véhicule tiers ne sont pas éblouis, et les abords du véhicule tiers sont éclairés au mieux pour la bonne vision du conducteur du véhicule dont on commande le faisceau lumineux.

On va maintenant définir le deuxième mode de réalisation qui est lui selon l'invention et dans lequel le véhicule n'est pas équipé d'un dispositif permettant la détermination de la distance entre ce véhicule et le véhicule tiers.

Dans ces conditions, on comprend que l'on ne peut appliquer comme précédemment un facteur multiplicatif à la largeur du véhicule puisqu'il n'est pas possible d'être certain de cette largeur du véhicule sur la base de la détection des dispositifs de signalisation et/ou d'éclairage d'un véhicule tiers par la caméra. En effet, tel que cela a été illustré sur la figure 5 à titre explicatif, les angles de détection par la caméra de deux phares d'un véhicule croisant pourront être les mêmes dans deux cas très distincts, à savoir, un premier cas dans lequel un véhicule de faible largeur 32 de type véhicule électrique urbain par exemple et un deuxième cas dans lequel un véhicule de grande largeur 34, de type camion, est à grande distance du véhicule de l'utilisateur.

On comprend que dans ce cas où la distance n'est pas connue et donc que la largeur du véhicule ne peut être déterminée avec précision, aucune solution dans laquelle on estime la largeur du véhicule n'est satisfaisante. Si l'on estime que le véhicule est de faible largeur alors qu'il s'agit en fait d'un camion, il y a de grande chance que le conducteur du camion soit ébloui du fait de la petite dimension de la zone qui en découlerait. Dans le cas contraire où l'on choisirait d'estimer que le véhicule à la plus grande largeur possible, on s'assurerait bien qu'aucun utilisateur du véhicule tiers n'est ébloui, mais cela serait fait au détriment d'un éclairage suffisant de la route et cela pourrait se révéler potentiellement dangereux pour le conducteur du véhicule dont on commande le faisceau lumineux.

Selon une première variante, qui n'est pas selon l'invention, on définit une empreinte virtuelle de forme rectangulaire comme exposé précédemment en utilisant une valeur moyenne prédéterminée de largeur du véhicule tiers, établie à partir d'un échantillon représentatif au sens statistique des véhicules en circulation sur un territoire donné (au moins plusieurs centaines de type et modèles de véhicules différents), sur lesquels on a mesuré la distance entre les dispositifs de signalisation et/ou d'éclairage du véhicule tiers, ce qui permet de calculer une distance moyenne à laquelle on ajoute un coefficient correcteur ou une valeur additionnelle correspondant aux rétroviseurs latéraux.

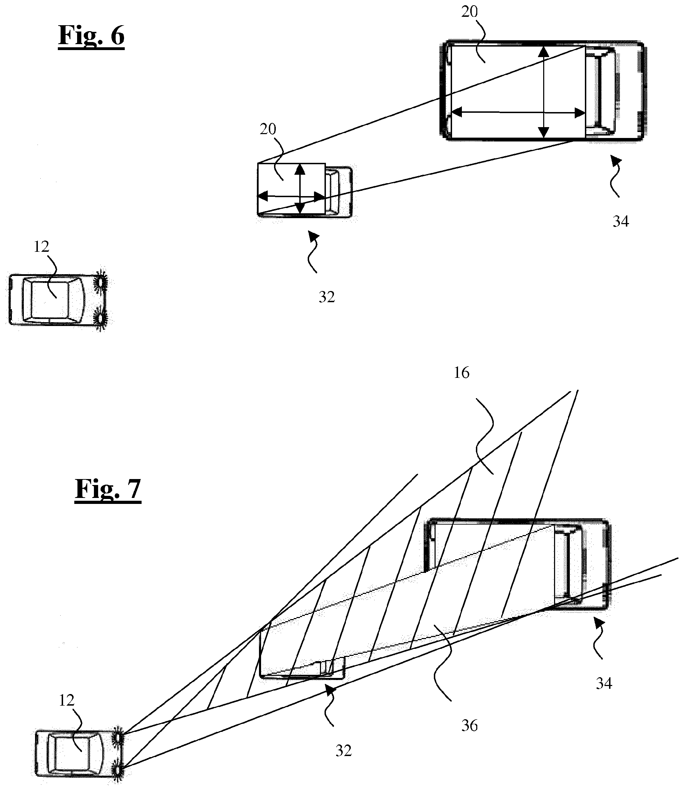

Selon une deuxième variante selon l'invention de ce deuxième mode de réalisation, on va s'affranchir de cette donnée sur la distance inter véhicules en définissant, tout comme dans le mode de réalisation précédent, une empreinte virtuelle sous forme d'un quadrilatère, mais la forme choisie ne sera pas ici un rectangle mais un trapèze (visible sur la figure 7), qui tel que cela sera décrit ci-après, sera construit en fonction de deux rectangles imaginaires obtenus selon le calcul du premier mode de réalisation.

Puisque la distance inter véhicules n'est pas connue précisément, on considère deux cas extrêmes représentatifs l'un de la détection potentielle d'un véhicule de faible largeur 32 et l'autre de la détection potentielle d'un véhicule de grande largeur 34. Une empreinte virtuelle intermédiaire est alors définie pour chacun des deux cas extrêmes. Ces deux empreintes intermédiaires sont combinées pour définir une empreinte unique 36, plus complexe, qui couvre les occupants quel que soit le véhicule tiers.

Le principe de l'invention est que deux points de lumière détectés par la caméra embarquée du véhicule sont utilisés pour définir une empreinte virtuelle du véhicule tiers qui est bidimensionnelle, les coins délimitant cette empreinte virtuelle donnant une information angulaire qui est utilisée pour ajuster les frontières de la zone cible de non-éblouissement dans la projection en plein phare.

Les moyens logiciels calculent dans ce cas, pour chaque phare du véhicule, des angles définis entre la direction de déplacement du véhicule et la droite passant par ce phare et certains des coins des deux empreintes intermédiaires bidimensionnelles.

Avantageusement, on ne considère que les quatre coins correspondant au trapèze illustré sur les figures 6 et 7, c'est à dire les coins proximaux de l'empreinte rectangulaire correspondant au véhicule de petite largeur et les coins distaux de l'empreinte rectangulaire correspondant au véhicule de grande largeur. Le calcul des angles entre la trajectoire du véhicule et la droite passant par un phare du véhicule et par l'un des coins du trapèze se fait alors avec des formules équivalentes à celles décrites précédemment, et le choix de l'angle servant à définir les frontières de la zone cible est effectué conformément à ce qui est décrit dans le premier mode de réalisation. On peut prévoir dans une variante que le calcul d'angle soit effectué pour chacun des coins des deux empreintes virtuelles, et que l'on détermine alors les frontières de la zone cible en prenant en compte les huit angles, en choisissant le plus petit angle des quatre angles "gauche" et le plus grand angle des quatre angles "droite".

Enfin, on commande la régulation du faisceau lumineux en atténuant l'intensité lumineuse de chaque phare dans la zone cible dont les frontières angulaires sont définies de manière à ce qu'une des frontières passe par le coin correspondant à celui des angles calculés précédemment de plus petite valeur tandis que l'autre des frontières passe par le coin correspondant à celui des angles calculés précédemment de plus grande valeur.

La description qui précède explique clairement comment l'invention permet d'atteindre les objectifs qu'elle s'est fixés et notamment le principe selon lequel le dispositif de commande utilise les deux points de lumière détectés pour créer une empreinte virtuelle bidimensionnelle (reflétant la largeur et la longueur du véhicule tiers) autour du véhicule tiers dont on se sert pour définir la zone cible de non-éblouissement.

En centrant la zone cible sur l'empreinte virtuelle, on s'assure que les occupants du véhicule tiers ne sont pas éblouis tout en évitant l'utilisation de marges supplémentaires qui agrandissent de façon non nécessaire la zone cible. On répond ainsi à la double exigence d'assurer un éclairage de la route sécurisant pour le conducteur du véhicule dont on commande le faisceau, et de ne pas éblouir les autres véhicules.

Selon l'invention, de façon avantageuse, la distance inter véhicules peut rester inconnue. On évite ici des calculs utilisant une approximation de la distance basée sur une hypothèse non vérifiée de la dimension du véhicule détecté, ce qui pourrait être une source d'erreurs significatives.

Dans le procédé selon l'invention, on pourra avantageusement détecter des feux d'un véhicule tiers, que celui-ci circule dans le sens inverse à celui du véhicule dont on contrôle le faisceau lumineux (cas de véhicules se croisant) ou dans le même sens que celui du véhicule dont on contrôle le faisceau lumineux (cas d'un véhicule circulant devant). Il n'est pas nécessaire de déterminer le sens de circulation du véhicule tiers. Toutefois, dans la mesure où le système permet d'établir si le véhicule tiers vient en croisement ou s'il s'agit d'un véhicule tiers circulant dans le même sens de circulation, on pourra ajuster la commande régulée du faisceau lumineux pour positionner au mieux l'empreinte virtuelle par rapport aux usagers du véhicule tiers.

## Revendications

1. Procédé de commande d'un faisceau lumineux (10) émis par les phares (18) d'un véhicule (12), consistant à définir une zone cible (16) dans laquelle l'intensité du faisceau lumineux est atténuée pour éviter d'éblouir un véhicule tiers (14) détecté par des moyens d'acquisition d'une image embarqués sur le véhicule,

**caractérisé en ce que** l'étendue de ladite zone cible est déterminée pour englober une empreinte quadrilatérale virtuelle bidimensionnelle (20) qui couvre au moins partiellement le véhicule tiers, dont une dimension de ladite empreinte est représentative d'une largeur du véhicule tiers et dont la profondeur selon la direction de circulation du véhicule est représentative d'une longueur estimée de ce véhicule tiers par des moyens de calcul embarqués sur le véhicule,

et **en ce que** le procédé comporte les étapes suivantes :

- on considère deux cas extrêmes représentatifs l'un de la détection potentielle d'un véhicule de petite largeur (32) et l'autre de la détection potentielle d'un véhicule de grande largeur (34),
- on associe à chacun de ces cas extrêmes une empreinte virtuelle bidimensionnelle quadrilatérale intermédiaire (20), par exemple trapézoïdale,
- on calcule, pour chaque phare du véhicule, des angles définis entre la direction de circulation du véhicule et la droite passant par ce phare et certains des coins des deux empreintes quadrilatérales intermédiaires,
- on définit des frontières angulaires de la zone cible (16) de manière à ce qu'une desdites frontières passe par le coin correspondant à celui des angles calculés précédemment de plus petite valeur tandis que l'autre desdites frontières passe par le coin correspondant à celui des angles calculés précédemment de plus grande valeur,
- et une étape de projection dans laquelle on atténue l'intensité du faisceau lumineux de chaque phare dans la zone cible dont les frontières sont ajustées sur ladite empreinte virtuelle.

2. Procédé selon la revendication 1, **caractérisé en ce que** le calcul desdits angles, pour chaque phare du véhicule, est effectué pour chacun des coins des deux empreintes intermédiaires.

3. Dispositif de commande d'un faisceau lumineux émis par des phares (18) d'un véhicule (12), comportant un dispositif de détection d'un véhicule tiers (14), **caractérisé en ce qu'**il comporte des moyens logiciels adaptés à communiquer avec ledit dispositif de détection pour recevoir en temps réel des informations relatives à la position angulaire des dispositifs d'éclairage et/ou de signalisation du véhicule tiers par rapport au dispositif de détection et à la direction de déplacement du véhicule, lesdits moyens logiciels intégrant des moyens de calcul adaptés d'une part à créer une empreinte virtuelle (20) du véhicule tiers en deux dimensions reflétant sa largeur et sa longueur, et d'autre part à procéder en temps réel à des changements de repère pour calculer les angles des coins de cette empreinte virtuelle du véhicule tiers par rapport à ladite direction de déplacement et aux phares du véhicule, ledit faisceau de lumière (10) comportant une zone cible (16) dans laquelle l'intensité du faisceau lumineux est atténuée et dont les frontières sont ajustées en fonction desdits angles, les moyens de calculs appliquant le procédé selon la revendication 1 ou 2.

4. Véhicule automobile, du type comportant un dispositif de commande de faisceau lumineux selon la revendication 3, dans lequel les phares (18) comportent une pluralité de sources lumineuses.

5. Véhicule automobile selon la revendication 4, **caractérisé en ce que** les sources lumineuses sont des diodes électroluminescentes.

**Patentansprüche**

1. Verfahren zur Steuerung eines Lichtstrahls (10), der von den Scheinwerfern (18) eines Fahrzeugs (12) ausgesendet wird, das darin besteht, eine Zielzone (16) zu definieren, in der die Intensität des Lichtstrahls abgeschwächt wird, um eine Blendung eines Drittfahrzeugs (14) zu vermeiden, das durch Bilderfassungsmittel an Bord des Fahrzeugs erfasst wird,

**dadurch gekennzeichnet, dass** die Ausdehnung der Zielzone so bestimmt ist, dass sie einen zweidimensionalen virtuellen vierseitigen Grundfläche (20) umfasst, der zumindest teilweise das Drittfahrzeug abdeckt, wobei eine Dimension des Abdrucks repräsentativ für eine Breite des Drittfahrzeugs ist und die Tiefe des Grundfläche in der Fahrtrichtung des Fahrzeugs repräsentativ für eine geschätzte Länge des Drittfahrzeugs durch Berechnungsmittel an Bord des Fahrzeugs ist,

und dass der Prozess die folgenden Schritte umfasst:

- Es werden zwei Extremfälle betrachtet, von denen der eine repräsentativ für die potenzielle Erkennung eines schmalen Fahrzeugs (32) und der andere repräsentativ für die potenzielle Erkennung eines breiten Fahrzeugs (34) ist,

- jeder dieser Extremfälle ist mit einem dazwischenliegenden zweidimensionalen vierseitigen virtuellen Grundfläche (20) verbunden, z.B. trapezförmig,
- für jeden Scheinwerfer des Fahrzeugs werden definierte Winkel zwischen der Fahrtrichtung des Fahrzeugs und der Linie, die durch diesen Scheinwerfer und einige der Ecken der beiden dazwischen liegenden vierseitigen Grundfläche verläuft, berechnet,
- Die Winkelgrenzen des Zielzone (16) sind so definiert, dass eine der Grenzen durch die Ecke verläuft, die der der zuvor berechneten Winkel mit kleinerem Wert entspricht, während die andere der Grenzen durch die Ecke verläuft, die der der zuvor berechneten Winkel mit größerem Wert entspricht,
- und einen Projektionsschritt, bei dem die Intensität des Lichtstrahls jedes Leuchtturms in dem Zielbereich abgeschwächt wird, dessen Grenzen auf diesem virtuellen Grundfläche eingestellt sind.

2. Verfahren nach Anspruch 1, **dadurch gekennzeichnet, dass** die Berechnung der genannten Winkel für jeden Scheinwerfer des Fahrzeugs für jede der Ecken der beiden Zwischenabdrücke durchgeführt wird.

3. Vorrichtung zur Steuerung eines Lichtstrahls, der von Scheinwerfern (18) eines Fahrzeugs (12) ausgesendet wird, mit einer Vorrichtung zur Erfassung eines Fremdfahrzeugs (14), **dadurch gekennzeichnet, dass** sie Softwaremittel umfasst, die geeignet sind, mit der Erfassungsvorrichtung zu kommunizieren, um in Echtzeit Informationen über die Winkelstellung der Beleuchtungs- und/oder Signalgebungsvorrichtungen des Fremdfahrzeugs in Bezug auf die Erfassungsvorrichtung und die Fahrtrichtung des Fahrzeugs zu empfangen, wobei die Software Mittel umfasst, die Berechnungsmittel umfassen, die geeignet sind, einerseits eine zweidimensionale virtuelle Grundfläche (20) des Drittfahrzeugs zu erzeugen, die dessen Breite und Länge widerspiegelt, und andererseits in Echtzeit Bezugsänderungen durchzuführen, um die Winkel der Ecken dieser virtuellen Grundfläche des Drittfahrzeugs in Bezug auf die Fahrtrichtung und die Scheinwerfer des Fahrzeugs zu berechnen, wobei das Lichtbündel (10) eine Zielzone (16) umfasst, in der die Intensität des Lichtbündels abgeschwächt ist und deren Grenzen in Abhängigkeit von den Winkeln eingestellt werden, wobei die Berechnungsmittel das Verfahren nach Anspruch 1 oder 2 anwenden.

4. Kraftfahrzeug des Typs mit einer Vorrichtung zur Steuerung des Lichtbündels nach Anspruch 3, bei dem die Scheinwerfer (18) mehrere Lichtquellen umfassen.

5. Kraftfahrzeug nach Anspruch 4, **dadurch gekennzeichnet, dass** die Lichtquellen Licht emittierende Dioden sind.

**Claims**

1. Method for controlling a light beam (10) emitted by the headlights (18) of a vehicle (12), consisting in defining a target zone (16) in which the intensity of the light beam is attenuated in order to avoid dazzling a third vehicle (14) detected by image acquisition means on board the vehicle, **characterized in that** the extent of said target zone is determined to encompass a two-dimensional virtual quadrilateral footprint (20) which at least partially covers the third-party vehicle, one dimension of said footprint being representative of a width of the third-party vehicle and the depth of said footprint in the direction of travel of the vehicle being representative of an estimated length of said third-party vehicle by calculation means on board the vehicle,
and **in that** the process comprises the following steps:

- two extreme cases are considered, one representative of the potential detection of a narrow vehicle (32) and the other representative of the potential detection of a wide vehicle (34),
- each of these extreme cases is associated with an intermediate two-dimensional quadrilateral virtual footprint (20), e.g. trapezoidal,
- for each headlight of the vehicle, defined angles are calculated between the direction of travel of the vehicle and the line passing through that headlight and some of the corners of the two intermediate quadrilateral footprints,
- angular boundaries of the target area (16) are defined so that one of said boundaries passes through the corner corresponding to that of the previously calculated angles of smaller value while the other of said boundaries passes through the corner corresponding to that of the previously calculated angles of larger value,
- and a projection step in which the intensity of the light beam of each headlight is attenuated in the target area whose boundaries are adjusted on said virtual footprint.

2. Method according to claim 1, **characterized in that** the calculation of the said angles, for each headlight of the vehicle, is carried out for each of the corners of the two intermediate footprints.

3. Device for controlling a light beam emitted by headlights (18) of a vehicle (12), comprising a device for detecting a third-party vehicle (14), **characterised in that** it comprises software means adapted to communicate with said detection device to receive in real time information relating to the angular position of the lighting and/or signalling devices of the third-party vehicle with respect to the detection device and to the direction of travel of the vehicle, said software means incorporating calculation means adapted on the one hand to create a virtual footprint (20) of the third party vehicle in two dimensions reflecting its width and length, and on the other hand to carry out in real time axis system changes in order to calculate the angles of the corners of this virtual footprint of the third party vehicle with respect to said direction of travel and to the headlights of the vehicle, said light beam (10) comprising a target zone (16) in which the intensity of the light beam is attenuated and the boundaries of which are adjusted as a function of said angles, the calculation means applying the method according to claim 1 or 2.

4. A motor vehicle, of the type comprising a light beam control device according to claim 3, in which the headlights (18) comprise a plurality of light sources.

5. Motor vehicle according to claim 4, **characterised in that** the light sources are light-emitting diodes.

## Fig. 1

## Fig. 2

**Fig. 3**

**Fig. 4**

**Fig. 5**

**Fig. 6**

**Fig. 7**

**EP 2 743 129 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2970686

- DE 102011050535 A1